# EUROPEAN PATENT SPECIFICATION

(11) **EP 3 675 434 B1**
(45) Date of publication and mention of the grant of the patent: **04.10.2023**
(21) Application number: 18848279.8
(22) Date of filing: 15.08.2018
(51) Int. Cl.: G06F 9/48, G06F 9/50

(54) **DISTRIBUTED SYSTEM RESOURCE ALLOCATION METHOD, DEVICE AND SYSTEM**
VERFAHREN, VORRICHTUNG UND SYSTEM FÜR VERTEILTE SYSTEMRESSOURCENZUWEISUNG
SYSTÈME, DISPOSITIF ET MÉTHODE D'ATTRIBUTION DE RESSOURCE SYSTÈME DISTRIBUÉE

(30) Priority: 24.08.2017 CN 201710737516
(43) Date of publication of application: 01.07.2020
(73) Proprietor: Alibaba Group Holding Limited, Grand Cayman (KY)
(72) Inventor: ZHANG, Yang, Zhejiang 311121 (CN); FENG, Yihui, Zhejiang 311121 (CN); OUYANG, Jin, Zhejiang 311121 (CN); HAN, Qiaohuan, Zhejiang 311121 (CN); WANG, Fang, Zhejiang 311121 (CN)
(74) Representative: Finnegan Europe LLP
(86) International application number: PCT/CN2018/100579
(87) International publication number: WO 2019/037626

(56) References cited:
- WO-A1-2011/050633
- WO-A1-2017/092525
- CN-A- 102 761 469
- CN-A- 103 294 533
- CN-A- 104 079 503
- US-A1- 2009 083 746
- US-A1- 2009 133 029
- US-A1- 2012 144 039
- US-A1- 2017 220 379
- Shuangcheng Niu ET AL: "Employing Checkpoint to Improve Job Scheduling in Large-Scale Systems" In: "LECTURE NOTES IN COMPUTER SCIENCE", 1 January 2013 (2013-01-01), Springer Berlin Heidelberg, Berlin, Heidelberg, XP055185092, ISSN: 0302-9743 ISBN: 978-3-54-045234-8 vol. 7698, pages 36-55, DOI: 10.1007/978-3-642-35867-8_3, * paragraphs [03.2], [03.3] *

## Description

### Technical Field

This application relate to the field of computer technologies, and in particular, to a distributed system resource allocation method, apparatus, and system.

### Technical Background

In a distributed system, when a job node needs to apply for resources, a job management server may send a resource application request to a resource scheduling server to apply for a certain number of machine resources for use by the job node. After receiving the resource application request, the resource scheduling server may calculate, according to remaining available resources in the distributed system, available resources that can be allocated to the job management server, generate a list of available resources, and send the list of available resources to the job management server. After receiving the list of available resources, the job management server may allocate the job node to a corresponding machine node to execute a job program.

Overall resources of a cluster may often be exhausted in the distributed system, which leads to the queuing of resource applications. In general, resource application requests can be queued according to priorities, and resource requests can be periodically taken out of a waiting queue and resubmitted to request allocation of resources. In the waiting queue, high-priority resource requests are ranked at the top and low-priority resource requests are ranked at the bottom. When the resource scheduling server receives a high-priority resource application request that requires immediate allocation of resources, the resource scheduling server may violently recycle low-priority job resources in order to ensure that the resources can be quickly obtained by the high-priority resource applications, thus allowing the high-priority resource applications to preempt the low-priority job resources.

Upon study, the applicant has found that when resources of low-priority jobs are preempted by high-priority resource applications, the resource scheduling server may immediately recycle the resources of the low-priority jobs; in this case, the program of the low-priority jobs being executed may be terminated immediately and forcibly. If most of the low-priority jobs have been executed, the method of immediate termination of the jobs makes it necessary for the low-priority jobs to start from scratch after resources are obtained again, which reduces the resource utilization efficiency of the whole system.

US 2017220379 A1 discloses a job execution scheduling system and associated methods for accommodating a request for additional computing resources to execute a job that is currently being executed or a request for computing resources to execute a new job. The job execution scheduling system may utilize a decision function to determine one or more currently executing jobs to select for resizing. Resizing a currently executing job may include de-allocating one or more computing resources from the currently executing job and allocating the de-allocated resources to the job for which the request was received.

US 2009083746 A1 discloses a method for job management of a computer system, a job management system, and a computer-readable recording medium. The method includes selecting, as a second job, a running job which is lower in priority than a first job and a number of computing nodes required for execution of which is not smaller than a deficient number of computing nodes due to execution of the first job when a number of free computing nodes in a cluster of the computer system is smaller than a number of computing nodes required for the first job, suspending all processes of the second job and executing the first job in the computing nodes which were used by the second job and the free computing nodes, and resuming execution of the second job after execution of the first job is completed.

US 2012144039 A1 discloses the scheduling of a processing job to be performed by at least a portion of a cluster of processing resources distributed across multiple machines. The processing job is associated with a certain entity having a certain amount of guaranteed processing resources on the cluster. If there are not enough processing resources to perform the job, and there are yet some remaining processing resources that are guaranteed to the certain entity, then one or more other jobs that are associated with other entities are at least partially preempted until there are enough processing resources to perform the processing job.

Shuangcheng Niu et al. "Employing Checkpoint to Improve Job Scheduling in Large-Scale Systems" discloses an aggressive backfilling approach with checkpoint-based preemption to address the inaccuracy in user-provided runtime estimate.

US 2009133029A1 discloses methods and systems for preemption of software in a computing system that include receiving a preempt request for a process in execution using a set of resources, pausing the execution of the process; and releasing the resources to a shared pool.

### Summary of the Invention

The present invention is defined in the appended independent claims to which reference should be made. Advantageous features are set out in the appended dependent claims.

A distributed system resource allocation method, apparatus, and system are provided in the embodiments of this application, through which the time for returning resources can be determined according to job execution information of a job management server for resource preemption and current job execution progress of a job management server for resource return, thus effectively improving the utilization of system resources and reducing resource waste.

To this end, the following technical solutions are provided in the embodiments of this application.

According to aspects of the present invention, there are provided distributed system resource allocation methods, a machine-readable medium, apparatuses for resource allocation, and a distributed resource allocation system as set forth in the appended claims. Other features of the invention will be apparent from the dependent claims, and the description which follows. Further features of the present invention will become apparent from the following description of exemplary embodiments with reference to the attached drawings.

According to the distributed system resource allocation method, apparatus, and system provided in the embodiments of this application, when determining that a resource preemption condition is met, the resource scheduling server can send a resource preemption request to the second job management server for resource return, and the second job management server can determine a resource return deadline according to job execution information of the first job management server comprised in the resource preemption request, and return, according to the determined resource return deadline and a current job execution progress of the second job management server, resources to be returned to the resource scheduling server before the expiration of the resource return deadline. With the method provided in the embodiments of this application, when it is determined that a resource preemption condition is met, resources that have been allocated to the second job management server are not recycled immediately, but the second job management server determines a resource return time according to the job execution information of the first job management server and the current job execution progress of the second job management server, so that the second job management server can effectively utilize the resources, and at the same time, the overall resource utilization efficiency of the system can be effectively improved, and resource waste can be reduced.

### Brief Description of the Drawings

In order to illustrate the technical solutions according to the embodiments of this application or in the prior art more clearly, the accompanying drawings required for describing the embodiments or the prior art are introduced briefly below. It is apparent that the accompanying drawings in the following description are only some embodiments described in this application. Those of ordinary skill in the art can obtain other drawings according to the accompanying drawings without any creative efforts.
FIG. 1 is a schematic diagram of a distributed resource allocation system according to an embodiment of this application;
FIG. 2 is a flowchart of a distributed system resource allocation method according to an embodiment of this application;
FIG. 3 is a flowchart of a distributed system resource allocation method according to another embodiment of this application;
FIG. 4 is a schematic diagram of a resource allocation queue according to an embodiment of this application;
FIG. 5 is a flowchart of a distributed system resource allocation method according to yet another embodiment of this application;
FIG. 6 is a flowchart of a distributed system resource allocation method according to still another embodiment of this application;
FIG. 7 is a schematic diagram of a first job management server according to an embodiment of this application;
FIG. 8 is a schematic diagram of a resource scheduling server according to an embodiment of this application;
FIG. 9 is a schematic diagram of a second job management server according to an embodiment of this application;
FIG. 10 is a block diagram of an apparatus for resource allocation according to an exemplary embodiment;
FIG. 11 is a block diagram of an apparatus for resource allocation according to an exemplary embodiment; and
FIG. 12 is a block diagram of an apparatus for resource allocation according to an exemplary embodiment.

### Detailed Description

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

A distributed system resource allocation method, apparatus, and system are provided in the embodiments of this application, through which the time for returning resources can be determined according to job execution information of a job management server for resource preemption and a current job execution progress of a job management server for resource return, the utilization of system resources can be effectively improved, and resource waste can be reduced.

Terms used in the embodiments of this application are merely used for describing specific embodiments, instead of limiting this application. Singular forms "a(n)," "said," and "the" used in the embodiments of this application and the appended claims also include plural forms, unless clearly specified in the context that other meanings are denoted. It should be further understood that the term "and/or" used in this text refers to and includes any or all possible combinations of one or more associated items listed.

The technical term "resource scheduling server" (the English full name is Resource Manager) generally refers to a server that coordinates and allocates system available resources in a distributed system.

The technical term "job management server" (the English full name is Job Master) generally refers to the role that controls all job nodes (Job Worker) of the job in the distributed system, responsible for applying for job resources from the resource scheduling server on behalf of all the job nodes, and sending job programs to a machine node. In general, a plurality of job management servers may be included in the distributed system.

The technical term "machine node" (the English full name is Machine Node) generally refers to the role responsible for supervising the execution of a user's job program on behalf of a machine in the distributed system.

The technical term "job node" (the English full name is Job Worker) generally refers to the role for executing a specific job program in the distributed system, which generally only communicates with a job management server.

The technical term "job application resources" (the English full name is Request) generally refers resources applied for in the distributed system by the job management server, corresponding to a resource application request.

The technical term "job obtaining resources" (the English full name is Resource) generally refers to resources obtained by the job management server from the distributed system, that is, resources allocated to the job management server by the resource scheduler.

The technical term "machine obtaining resources" (the English full name is Resource) generally refers to resources of a certain job node obtained by a machine from the resource scheduler. In general, a job node is allowed to execute a program only after the machine obtains resources of the job node from the resource scheduler. After resources of a certain job node are recycled by the resource scheduler, the machine will forcibly terminate the execution of the job node.

The technical term "priority of the resource application request" (Priority) is used to describe the priority of the resource application request. A higher priority indicates that the resource request is more important and should be met preferentially.

The technical term "production job" generally refers to a job executed at a fixed time each day.

The technical term "development job" generally refers to an experimental job submitted by a developer to debug a program, with a variable daily execution time and a lower priority.

The technical term "job output deadline" generally refers to the latest time a user job can be completely executed.

The technical term "resource obtaining deadline" generally refers to the latest time the job management server obtains the resources.

The technical term "resource return deadline" generally refers to the latest time the job management server returns the resources.

The technical term "job execution time" generally refers to the time it takes to completely execute a job.

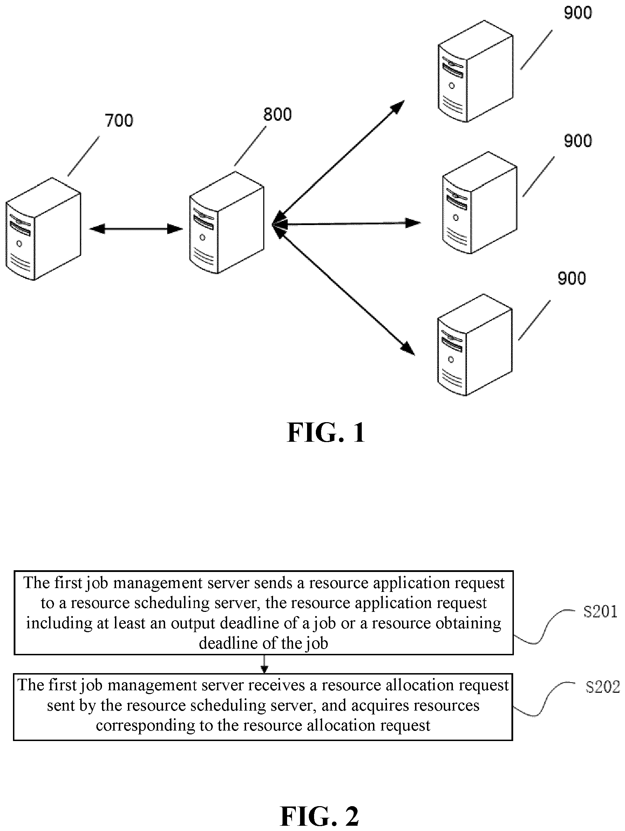

Referring to FIG. 1, a distributed resource allocation system according to an embodiment of this application is shown. The distributed resource allocation system includes a resource scheduling server 800, a first job management server 700, and a second job management server 900. A plurality of job management servers may be included in the distributed resource allocation system.

It should be noted that in the prior art, when resources of a low-priority job are preempted by a high-priority resource application, the resource scheduling server may immediately recycle the resources of the low-priority job. In this case, the program of the low-priority job being executed may be terminated immediately and forcibly.

Upon study, the applicant has found that such an implementation may have at least the following defects. (1) Assuming that a low-priority job needs to be executed for 1 hour and has been executed for 55 minutes currently, it is expected that resources can be returned after the job is executed for another 5 minutes. If a resource preemption event occurs at this point, and the resource scheduling server forcibly recycles resources of the low-priority job, the resources are also wasted in the 55 minutes from the perspective of resource utilization of the whole system. (2) If the low-priority job can only cede resources to a high-priority job during execution, the violent recycling practice will result in a complete loss of the executed portion of the low-priority job and there is no chance to make a backup. When the low-priority job obtains resources again, its execution has to start from scratch, thus reducing the execution efficiency. (3) Assuming that a high-priority job needs to be executed for 1 hour and its submission time of a resource application request is at an interval of 2 hours from the job output deadline, if the high-priority job preempts the resources of the low-priority job immediately and the low-priority job can be completely executed in only 5 minutes, such violent preemption at this point is unnecessary.

Through the above analysis, the applicant has found that if the resources of the low-priority job are directly violently recycled and allocated to the high-priority job without taking into account the execution time of the high-priority job, the output deadline, and the execution progress of the low-priority job, an unnecessary preemption event will occur, thereby reducing the resource utilization of the system.

In view of the above, a resource allocation method, apparatus, and system are provided in this application to replace the method of directly violently recycling allocated resources of a low-priority job. When a resource preemption event occurs, the resource scheduling server and a job management server of the low-priority job can perform a round of interactive negotiation at first, and comprehensively judge the resource recycle time of the low-priority job according to information such as the execution time of the high-priority job, the output deadline, and the execution progress of the low-priority job, so that it can be ensured that the high-priority job can obtain resources and the effective resource utilization of the system can be maximized at the same time.

As shown in FIG. 1, the distributed resource allocation system includes a resource scheduling server 800, a first job management server 700, and a second job management server 900.

The first job management server 700 is configured to send a resource application request to the resource scheduling server, the resource application request including at least job execution information of the first job management server 700.

The resource scheduling server 800 is configured to determine the first job management server 700 for resource preemption and the second job management server 900 for resource return when it is judged that a resource preemption condition is met; send a resource preemption request to the second job management server 900 for resource return, the resource preemption request including at least job execution information corresponding to the first job management server 700 for resource preemption; and receive a resource return request sent by the second job management server 900 for resource return, and allocate resources corresponding to the resource return request to the first job management server 700 for resource preemption.

The second job management server 900 is configured to receive the resource preemption request sent by the resource scheduling server 800, and determine, according to the job execution information corresponding to the first job management server 700 included in the resource preemption request, a resource return deadline of the second job management server 900; and return, according to the determined resource return deadline and a current job execution progress of the second job management server 900, the resources to be returned to the resource scheduling server 700 .

The resource allocation system according to the embodiment of this application is briefly introduced above. Resource allocation methods according to the embodiments of this application are introduced below from the perspective of a first job manager, a resource scheduling server, and a second job management server respectively.

The resource allocation methods according to the embodiments of this application are introduced below with reference to FIG. 2 to FIG. 5.

Referring to FIG. 2, a flowchart of a distributed system resource allocation method according to an embodiment of this application is shown. As shown in FIG. 2, the method is applied to a first job management server and may include the following steps.

In S201, the first job management server sends a resource application request to a resource scheduling server, the resource application request including at least an output deadline of a job or a resource obtaining deadline of the job.

In a specific implementation, the first job management server that needs to obtain resources can send a resource application request to the resource scheduling server. In a possible implementation, the resource application request includes an output deadline of a job, that is, the latest output time of the job. In such an implementation, the resource application request only includes the output deadline of the job, and the execution time of the job is calculated by the resource scheduling server. For example, the resource scheduling server acquires historical data of the job and obtains the execution time of the job by calculation according to the historical data of the job. For example, the execution time of the job is generally regular and can be determined by the job management server or the resource scheduling server according to historical data such as the average execution time of the job over the past 7 days.

In another possible implementation, the resource application request can include an output deadline of a job and execution time of the job. It should be noted that the execution time of the job generally refers to the time required for completing the execution of the job. For example, it can be the duration from the time when resources are obtained and the job is started to the time when the job is completed and the resources are returned. In general, the execution time of the job can be determined in the following manners. (1) A user can specify the execution time of the job. For example, when a user job is formally submitted to a distributed system for execution, offline debugging must be carried out. The execution time of the user job can be estimated through offline debugging, and the execution time of the job can be specified or set by the user when a resource application request is submitted. (2) Historical data of the job is acquired, and the execution time of the job is obtained by calculation according to the historical data of the job.

In another possible implementation, the resource application request includes a resource obtaining deadline of the job. In a specific implementation, the first job management server can determine execution time and an output deadline of the job, and obtain the resource obtaining deadline of the job according to a difference between the output deadline of the job and the execution time of the job. For example, resource obtaining deadline TA_Recieve = output deadline - execution time. For example, an output deadline of a certain job is 22:00, the execution time of the job is 2 hours, and the resource obtaining deadline is 20:00.

Of course, in other implementations, the resource application request can also include the execution time of the job, the output deadline of the job, and the resource obtaining deadline, which is not limited here.

In S202, the first job management server receives a resource allocation request sent by the resource scheduling server, and acquires resources corresponding to the resource allocation request.

It should be noted that different from the method in the prior art that the resource application request only includes the request submission time, the resource application request in this application further includes execution information of the job, and a resource obtaining deadline and/or a resource return deadline of the job are/is determined accordingly. Resource allocation and return time can be determined more flexibly, and the resource utilization efficiency can be effectively improved.

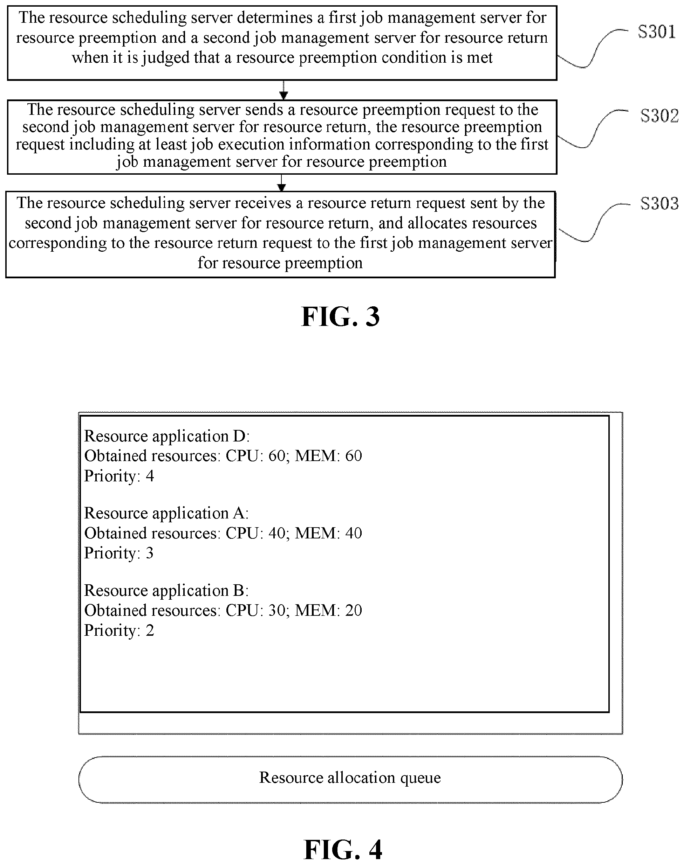

Referring to FIG. 3, a flowchart of a distributed system resource allocation method according to an embodiment of this application is provided. As shown in FIG. 3, the method is applied to a resource scheduling server, and may include the following steps.

In S301, the resource scheduling server determines a first job management server for resource preemption and a second job management server for resource return when it is judged that a resource preemption condition is met.

In a specific implementation, the judging that a resource preemption condition is met includes: judging that the resource preemption condition is met when it is determined that the priority of the received resource application request is high and the quantity of remaining available resources of the system is less than the quantity of resources requested by the resource application request. For example, the first job management server sends a resource application request C to the resource scheduling server. It is assumed that resources that the first job management server needs to apply for are CPU: 70 and MEM: 60, and the priority of the resource application request is 4. At this point, remaining available resources of the system are CPU: 0 and MEM: 0, and in this case, the remaining available resources of the system cannot meet or cannot fully meet the request of the high-priority job, and resource preemption will be triggered. The resource scheduling server may traverse a resource allocation queue to determine the job management server that needs to return resources. Specifically, there is a resource allocation queue in the resource scheduling server, which records resource allocation of the resource scheduling server to resource applications. This queue is ranked according to priorities of the resource applications. When a high-priority resource application is submitted to the resource scheduling server and the remaining resources of the system are insufficient to meet the resource application, the resource scheduling server will traverse the resource allocation queue in an order from low priorities to high priorities. For each resource application with a priority lower than that of the high-priority resource application, it is first assumed that all its allocated resources are recycled and then accumulated with remaining resources of a cluster. It is judged whether new remaining resources obtained after accumulation can meet the high-priority resource application. If yes, the traversal is stopped. If no, the resource scheduling server continues to traverse the next low-priority resource application until the high-priority resource application can be met. Used resources of all low-priority jobs can be preempted by the high-priority job. As shown in FIG. 4, a schematic diagram of a resource allocation queue according to an embodiment of this application is shown. For example, it is assumed that the resource allocation queue is traversed in an order from low priorities to high priorities. Assuming that allocated resources of a resource application B are all preempted, new remaining resources are CPU: 30 and MEM: 20. This is insufficient to meet the high-priority resource application. The resource application B is continuously traversed. Assuming that its allocated resources are all preempted, new remaining resources are CPU: 70 and MEM: 60. In this case, the remaining resources can meet the high-priority resource application. Then, the second job management server for resource return is determined as job management servers corresponding to the resource application B and the resource application A.

In S302, the resource scheduling server sends a resource preemption request to the second job management server for resource return, the resource preemption request including at least job execution information corresponding to the first job management server for resource preemption.

Different from the method of directly violently recycling allocated resources of the second job management server for resource return in the prior art, in the embodiment of this application, the resource scheduling server sends a resource preemption request to the second job management server for resource return to notify the second job management server that it needs to return resources to high-priority jobs.

In a possible implementation, the resource application request sent by the first job manager to the resource scheduling server only includes an output deadline of a job, and job execution information of the first job management server included in the resource preemption request may include the output deadline of the job and execution time of the job. The execution time of the job is determined in the following manner: the resource scheduling server acquires historical data of the job and obtains the execution time of the job by calculation according to the historical data of the job.

In another possible implementation, the resource application request sent by the first job manager to the resource scheduling server includes an output deadline of a job and execution time of the job, and job execution information of the first job management server included in the resource preemption request may include the output deadline of the job and the execution time of the job. Alternatively, the job execution information of the first job management server included in the resource preemption request may include a resource obtaining deadline of the job. The resource obtaining deadline of the job is determined in the following manner.

In another possible implementation, the resource application request sent by the first job manager to the resource scheduling server includes a resource obtaining deadline of the job, and job execution information of the first job management server included in the resource preemption request may include the resource obtaining deadline of the job.

When the resource scheduling server determines that the second job management server for resource return includes a plurality of job management servers, the resource scheduling server sends a resource preemption request to the plurality of job management servers respectively.

In S303, the resource scheduling server receives a resource return request sent by the second job management server for resource return, and allocates resources corresponding to the resource return request to the first job management server for resource preemption.

It should be noted that when determining a first job management server for resource preemption and a second job management server for resource return, the resource scheduling server can record a correspondence between the first job management server and the second job management server. When the second job management server sends a resource return request, returned resources can be allocated to the corresponding first job management server and may not be allocated to other waiting job management servers, thus ensuring that high-priority jobs can quickly get the resources.

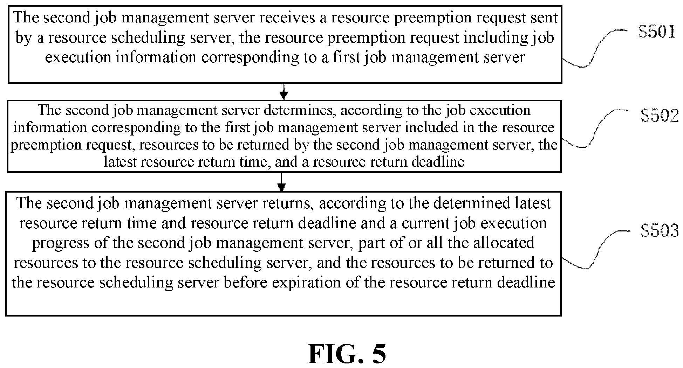

Referring to FIG. 5, a flowchart of a distributed system resource allocation method according to an embodiment of this application is shown. As shown in FIG. 5, the method is applied to a second job management server and may include the following steps.

In S501, the second job management server receives a resource preemption request sent by a resource scheduling server, the resource preemption request including job execution information corresponding to a first job management server.

The job execution information corresponding to the first job management server may include an output deadline of the job and execution time of the job, or the job execution information includes a resource obtaining deadline of the job.

It should be noted that the resource preemption request may further include the quantity of returned resources, and the second job management server can determine to return part of or all the allocated resources according to the quantity of the returned resources.

In S502, the second job management server determines, according to the job execution information corresponding to the first job management server and included in the resource preemption request, resources to be returned by the second job management server and a resource return deadline.

In some implementations, the job execution information corresponding to the first job management server includes an output deadline of the job and execution time of the job, and the determining, according to the job execution information corresponding to the first job management server and included in the resource preemption request, resources to be returned by the second job management server and a resource return deadline includes: obtaining a resource obtaining deadline of the job according to a difference between the output deadline of the job and the execution time of the job, and taking the resource obtaining deadline of the job as the resource return deadline of the second job management server.

In another implementation, the job execution information corresponding to the first job management server includes a resource obtaining deadline of the job, and the resource obtaining deadline can be taken as a resource return deadline.

In S503, the second job management server returns, according to the determined resource return deadline and a current job execution progress of the second job management server, the resources to be returned to the resource scheduling server before expiration of the resource return deadline.

In some implementations, the returning, according to the determined resource return deadline and a current job execution progress of the second job management server, the resources to be returned to the resource scheduling server before expiration of the resource return deadline includes: obtaining remaining time for completion of the current job by calculation according to the current job execution progress of the second job management server; and returning, by the second job management server, the resources to be returned to the resource scheduling server after execution of the current job is completed if it is judged that a sum of the current time and the remaining time for completion of the current job is not greater than the resource return deadline.

In some implementations, the returning, according to the determined resource return deadline and a current job execution progress of the second job management server, the resources to be returned to the resource scheduling server before expiration of the resource return deadline includes: obtaining remaining time for completion of the current job by calculation according to the current job execution progress of the second job management server; and the second job management server backing up the current job, recording a backup position, and returning the resources to be returned to the resource scheduling server after the backup is completed if it is judged that a sum of the current time and the remaining time for completion of the current job is greater than the resource return deadline. Further, the method also includes: receiving resources re-allocated by the resource scheduling server, acquiring the backup of the current job, and resuming the execution of the current job from the backup position.

For example, after receiving the resource preemption request sent by the resource scheduling server, the second job management server can determine the final resource return time TA_Return and obtain the remaining time for completion of the job according to the time TA_run for which the current job has been executed and estimated execution time of the job TA_all: TA_left = TA_all - TA_run. If the current time + TA_left <= TA _Return, the resources are returned naturally after the execution of the job A is completed. If the current time + TA_left > TA _Return, the job A starts recording backups when its execution is close to the time point of TA_Return, so that the execution can be resumed from the backup position, rather than from scratch, when resources are obtained again. After the backups are completely recorded, the second job management server actively returns the resources to the resource scheduling server and at the same time, waits for the resource scheduling server to re-allocate the resources.

In order to facilitate those skilled in the art to understand the implementation of this application more clearly, the implementation of this application is introduced below with a specific example. It should be noted that the specific example is only intended to enable those skilled in the art to understand this application more clearly, but the implementation of this application is not limited to the specific example.

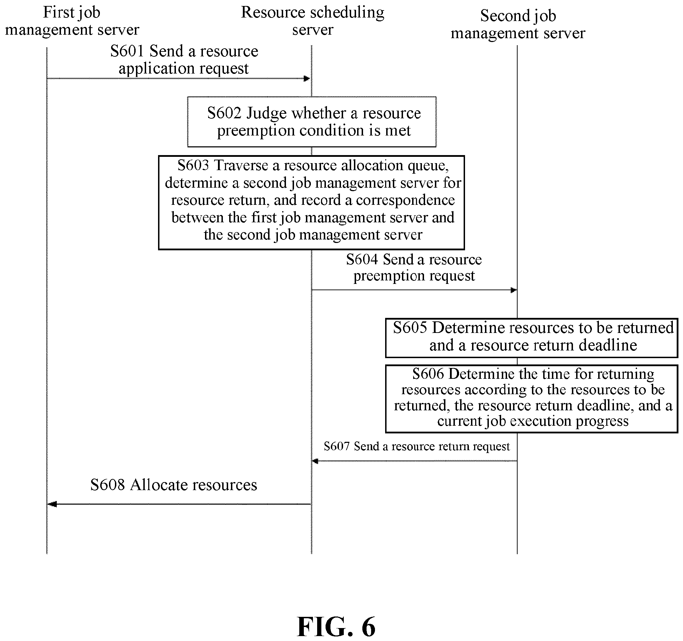

Referring to FIG. 6, a flowchart of a distributed system resource allocation method according to an embodiment of this application is shown. As shown in FIG. 6, the method may include the following steps.

In S601, a first job management server sends a resource application request to a resource scheduling server.

The resource application request includes an output deadline of a job and execution time of the job.

In S602, the resource scheduling server receives the resource application request and judges whether a resource preemption condition is met.

In S603, the resource scheduling server determines that the resource preemption condition is met, traverses a resource allocation queue, determines a second job management server for resource return, and records a correspondence between the first job management server and the second job management server.

A plurality of second job management servers can be determined as a job management server for resource return.

In S604, the resource scheduling server sends a resource preemption request to the second job management server.

The resource preemption request includes an output deadline of a job and execution time of the job of the first job management server.

In S605, the second job management server determines a resource return deadline.

The second job management server obtains a resource obtaining deadline of the job according to a difference between the output deadline of the job and the execution time of the job, and takes the resource obtaining deadline of the job as the resource return deadline of the second job management server.

In S606, the second job management server determines the time for returning resources according to the resource return deadline and a current job execution progress of the second job management server.

The second job management server obtains the remaining time for completion of the current job by calculation according to the current job execution progress of the second job management server. The second job management server returns the resources to be returned to the resource scheduling server after execution of the current job is completed if it is judged that a sum of the current time and the remaining time for completion of the current job is not greater than the resource return deadline. The second job management server backs up the current job, records a backup position, and returns the resources to be returned to the resource scheduling server after the backup is completed if it is judged that a sum of the current time and the remaining time for completion of the current job is greater than the resource return deadline.

In S607, the second job management server sends a resource return request.

In S608, the resource scheduling server allocates resources to the first job management server.

According to the resource allocation method provided in the embodiment of this application, the resource utilization efficiency of the system can be improved to the greatest extent while it is ensured that resources can be quickly obtained by high-priority jobs.

Devices corresponding to the methods provided in the embodiments of this application are introduced below.

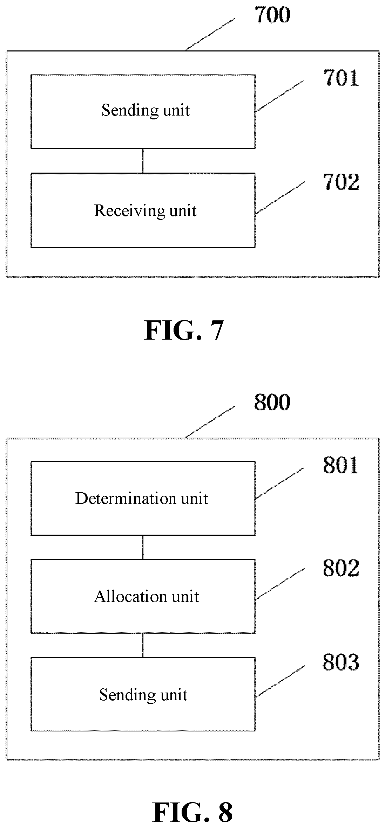

Referring to FIG. 7, a schematic diagram of a first job management server according to an embodiment of this application is shown.

A first job management server apparatus 700, including:
a sending unit 701 configured to send a resource application request to a resource scheduling server, the resource application request including at least an output deadline of a job or a resource obtaining deadline of the job, wherein the specific implementation of the sending unit 701 can be obtained with reference to S201 in the embodiment shown in FIG. 2; and
a receiving unit 702 configured to receive a resource allocation request sent by the resource scheduling server, and acquire resources corresponding to the resource allocation request, wherein the specific implementation of the receiving unit 702 can be obtained with reference to S202 in the embodiment shown in FIG. 2.

Referring to FIG. 8, a schematic diagram of a resource scheduling server according to an embodiment of this application is shown.

A resource scheduling server 800, including:
a determination unit 801 configured to determine a first job management server for resource preemption and a second job management server for resource return when it is judged that a resource preemption condition is met, wherein the specific implementation of the determination unit 801 can be obtained with reference to S301 in the embodiment shown in FIG. 3;
a sending unit 802 configured to send a resource preemption request to the second job management server for resource return, the resource preemption request including at least job execution information corresponding to the first job management server for resource preemption, wherein the specific implementation of the sending unit 802 can be obtained with reference to S302 in the embodiment shown in FIG. 3; and
an allocation unit 803 configured to receive a resource return request sent by the second job management server for resource return, and allocate resources corresponding to the resource return request to the first job management server for resource preemption, wherein the specific implementation of the allocation unit 803 can be obtained with reference to S303 in the embodiment shown in FIG. 3.

In some implementations, the resource scheduling server further includes:
a judging unit configured to judge that the resource preemption condition is met when it is determined that the priority of the received resource application request is high and the quantity of remaining available resources of the system is less than the quantity of resources requested by the resource application request.

In some implementations, the job execution information corresponding to the first job management server sent by the sending unit includes an output deadline of the job and execution time of the job, or the job execution information includes a resource obtaining deadline of the job.

In some implementations, the resource application request of the first job management server received by the receiving unit includes the output deadline of the job. The execution time of the job sent by the sending unit is determined in the following manner: acquiring historical data of the job, and obtaining the execution time of the job by calculation according to the historical data of the job. The resource obtaining deadline of the job sent by the sending unit is determined in the following manner: obtaining the resource obtaining deadline of the job according to a difference between the output deadline of the job and the execution time of the job.

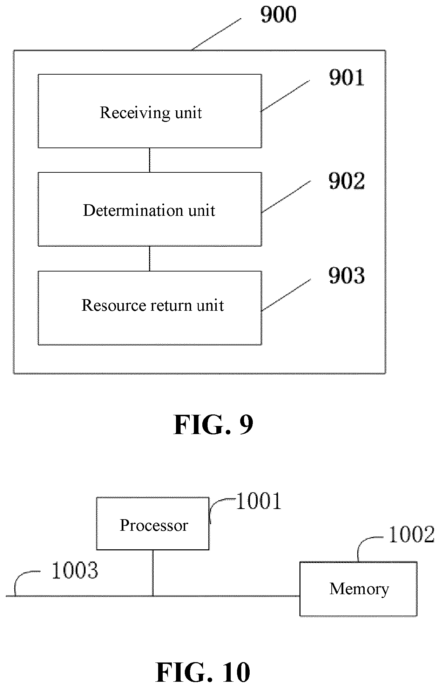

Referring to FIG. 9, a schematic diagram of a second job management server according to an embodiment of this application is shown.

A second job management server 900, including:
a receiving unit 901 configured to receive a resource preemption request sent by a resource scheduling server, the resource preemption request including job execution information corresponding to a first job management server, wherein the specific implementation of the receiving unit 901 can be obtained with reference to S501 in the embodiment shown in FIG. 5;
a determination unit 902 configured to determine, according to the job execution information corresponding to the first job management server and included in the resource preemption request, resources to be returned by the second job management server and a resource return deadline, wherein the specific implementation of the determination unit 902 can be obtained with reference to S502 in the embodiment shown in FIG. 5; and
a resource return unit 903 configured to return, according to the determined resource return deadline and a current job execution progress of the second job management server, the resources to be returned to the resource scheduling server before expiration of the resource return deadline, wherein the specific implementation of the resource return unit 903 can be obtained with reference to S503 in the embodiment shown in FIG. 5.

In some implementations, the job execution information corresponding to the first job management server received by the receiving unit includes an output deadline of the job and execution time of the job. The determination unit is configured to obtain a resource obtaining deadline of the job according to a difference between the output deadline of the job and the execution time of the job, and take the resource obtaining deadline of the job as the resource return deadline of the second job management server.

In some implementations, the resource return unit is specifically configured to: obtain remaining time for completion of the current job by calculation according to the current job execution progress of the second job management server; and return, by the second job management server, the resources to be returned to the resource scheduling server after execution of the current job is completed if it is judged that a sum of the current time and the remaining time for completion of the current job is not greater than the resource return deadline.

In some implementations, the resource return unit is specifically configured to: obtain remaining time for completion of the current job by calculation according to the current job execution progress of the second job management server; and back up, by the second job management server, the current job, record a backup position, and return the resources to be returned to the resource scheduling server after the backup is completed if it is judged that a sum of the current time and the remaining time for completion of the current job is greater than the resource return deadline.

In some implementations, the second job management server further includes:
an acquisition unit configured to receive resources re-allocated by the resource scheduling server, acquire the backup of the current job, and resume the execution of the current job from the backup position.

Referring to FIG. 10, a block diagram of an apparatus for resource allocation according to another embodiment of this application is shown. The apparatus includes: at least one processor 1001 (such as a CPU), a memory 1002, and at least one communication bus 1003 configured to implement connection communications between the apparatuses. The processor 1001 is configured to execute executable modules stored in the memory 1002, such as computer programs. The memory 1002 may include a high-speed Random Access Memory (RAM), and may also include a non-volatile memory, such as at least one magnetic disk memory. One or more programs are stored in the memory, and configured to be executed by the one or more processors 1001, and the one or more programs include instructions for performing the following operations: receiving a resource preemption request sent by a resource scheduling server, the resource preemption request including job execution information corresponding to a first job management server; determining, according to the job execution information corresponding to the first job management server and included in the resource preemption request, resources to be returned by the second job management server and a resource return deadline; and returning, according to the determined resource return deadline and a current job execution progress of the second job management server, the resources to be returned to the resource scheduling server before expiration of the resource return deadline.

In some implementations, the processor 1001 is specifically configured to execute the one or more programs including instructions for performing the following operations: when the job execution information corresponding to the first job management server includes an output deadline of the job and execution time of the job, obtaining a resource obtaining deadline of the job according to a difference between the output deadline of the job and the execution time of the job, and taking the resource obtaining deadline of the job as the resource return deadline of the second job management server.

In some implementations, the processor 1001 is specifically configured to execute the one or more programs including instructions for performing the following operations: obtaining remaining time for completion of the current job by calculation according to the current job execution progress of the second job management server; and returning, by the second job management server, the resources to be returned to the resource scheduling server after execution of the current job is completed if it is judged that a sum of the current time and the remaining time for completion of the current job is not greater than the resource return deadline.

In some implementations, the processor 1001 is specifically configured to execute the one or more programs including instructions for performing the following operations: obtaining remaining time for completion of the current job by calculation according to the current job execution progress of the second job management server; and the second job management server backing up the current job, recording a backup position, and returning the resources to be returned to the resource scheduling server after the backup is completed if it is judged that a sum of the current time and the remaining time for completion of the current job is greater than the resource return deadline.

In some implementations, the processor 1001 is specifically configured to execute the one or more programs including instructions for performing the following operations: receiving resources re-allocated by the resource scheduling server, acquiring the backup of the current job, and continuing to execute the current job from the backup position.

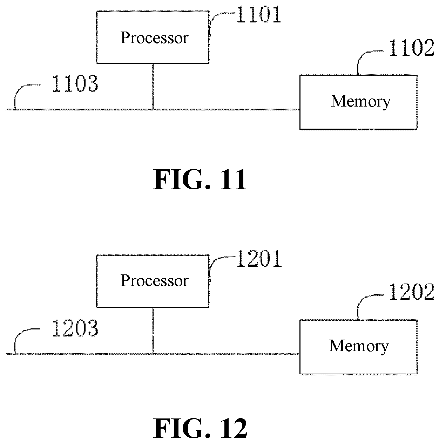

Referring to FIG. 11, a block diagram of an apparatus for resource allocation according to another embodiment of this application is shown. The apparatus includes: at least one processor 1101 (such as a CPU), a memory 1102, and at least one communication bus 1103 configured to implement connection communications between the apparatuses. The processor 1101 is configured to execute executable modules stored in the memory 1102, such as computer programs. The memory 1102 may include a high-speed Random Access Memory (RAM), and may also include a non-volatile memory, such as at least one magnetic disk memory. One or more programs are stored in the memory, and configured to be executed by the one or more processors 1101, and the one or more programs include instructions for performing the following operations: determining a first job management server for resource preemption and a second job management server for resource return when it is judged that a resource preemption condition is met; sending a resource preemption request to the second job management server for resource return, the resource preemption request including at least job execution information corresponding to the first job management server for resource preemption; and receiving a resource return request sent by the second job management server for resource return, and allocating resources corresponding to the resource return request to the first job management server for resource preemption.

In some implementations, the processor 1101 is specifically configured to execute the one or more programs including instructions for performing the following operations: judging that the resource preemption condition is met when it is determined that the priority of the received resource application request is high and the quantity of remaining available resources of the system is less than the quantity of resources requested by the resource application request.

In some implementations, the processor 1101 is specifically configured to execute the one or more programs including instructions for performing the following operations: acquiring historical data of the job, and obtaining the execution time of the job by calculation according to the historical data of the job; and obtaining the resource obtaining deadline of the job according to a difference between the output deadline of the job and the execution time of the job.

Referring to FIG. 12, a block diagram of an apparatus for resource allocation according to another embodiment of this application is shown. The apparatus includes: at least one processor 1201 (such as a CPU), a memory 1202, and at least one communication bus 1203 configured to implement connection communications between the apparatuses. The processor 1201 is configured to execute executable modules stored in the memory 1202, such as computer programs. The memory 1202 may include a high-speed Random Access Memory (RAM), and may also include a non-volatile memory, such as at least one magnetic disk memory. One or more programs are stored in the memory, and configured to be executed by the one or more processors 1201, and the one or more programs include instructions for performing the following operations: sending a resource application request to a resource scheduling server, the resource application request including at least an output deadline of a job or a resource obtaining deadline of the job; and receiving a resource allocation request sent by the resource scheduling server, and acquiring resources corresponding to the resource allocation request.

In an exemplary embodiment, a non-volatile computer readable medium including instructions is further provided, for example, a memory 304 including instructions. The instructions can be executed by a processor 320 of an apparatus 300 to implement the above method. For example, the non-volatile computer readable medium may be an ROM, a RAM, a CD-ROM, a magnetic tape, a floppy disk, an optical data storage device, and so on.

A machine-readable medium is provided. For example, the machine-readable medium may be a non-volatile computer readable medium. When instructions in the medium are executed by a processor of an apparatus (a terminal or server), the apparatus can perform the deep hole measurement method as shown in FIG. 1. The method includes: receiving a resource preemption request sent by a resource scheduling server, the resource preemption request including job execution information corresponding to a first job management server; determining, according to the job execution information corresponding to the first job management server, resources to be returned by the second job management server and a resource return deadline; and returning, according to the determined resources to be returned and resource return deadline and a current job execution progress of the second job management server, the resources to be returned to the resource scheduling server before expiration of the resource return deadline.

The setting of the units or modules in the apparatus of this application can be implemented with reference to the methods shown in FIG. 2 to FIG. 6, which are not described in detail here.

The specification and embodiments are only considered exemplary and the true scope and spirit of this application are indicated by the claims below.

The scope of this application is limited only by the appended claims.

It should be noted that in this text, the relation terms such as first and second are merely used to distinguish one entity or operation from another entity or operation, and do not require or imply that the entities or operations have this actual relation or order.

This application may be described in a common context of a computer executable instruction executed by a computer, for example, a program module. Generally, the program module includes a routine, a program, an object, an assembly, a data structure, and the like for executing a specific task or implementing a specific abstract data type. This application may also be practiced in distributed computing environments, and in the distributed computer environments, a task is executed by using remote processing devices connected through a communications network. In the distributed computer environments, the program module may be located in local and remote computer storage media including a storage device.

The embodiments of this specification are all described in a progressive manner, each embodiment emphasizes a difference between it and other embodiments, and identical or similar parts in the embodiments may be obtained with reference to each other. In particular, the apparatus embodiment is basically similar to the method embodiment, so that it is described simply. For related parts, refer to the descriptions of the parts in the method embodiment. The apparatus embodiment described above is merely schematic. The units described as separate parts may or may not be physically separate, and parts displayed as units may or may not be physical units, i.e., may be located in one position, or may be distributed on a plurality of network units. Some of or all the modules therein may be selected according to actual needs to achieve the objectives of the solutions of the embodiments.

## Claims

1. A distributed system resource allocation method performed by a second job management server (900), the method comprising the steps of:
receiving (501) a resource preemption request sent by a resource scheduling server (800), the resource preemption request comprising job execution information corresponding to a first job management server (700);
determining (502), according to the job execution information corresponding to the first job management server (700) and comprised in the resource preemption request, resources to be returned by the second job management server (900) and a resource return deadline, wherein the job execution information comprises an output deadline of a job and execution time of the job or comprises a resource obtaining deadline of the job, the resource return deadline being the latest time by which the second job management server (900) must return the resources; and
returning (503), according to the resource return deadline and a current job execution progress of the second job management server (900), the resources to be returned to the resource scheduling server (800) before expiration of the resource return deadline,
wherein the resources to be returned to the resource scheduling server (800) are returned after execution of the current job is completed when a sum of a current time and a remaining time for completion of the current job is not greater than the resource return deadline.

2. The method of claim 1,
wherein the job execution information corresponding to the first job management server (700) comprises the output deadline of the job and the execution time of the job, and
wherein the step of determining (502), according to the job execution information corresponding to the first job management server (700) and comprised in the resource preemption request, the resources to be returned by the second job management server (900) and the resource return deadline comprises the steps of:
determining the resource obtaining deadline of the job according to a difference between the output deadline of the job and the execution time of the job, and
setting the resource return deadline of the second job management server (900) as the resource obtaining deadline of the job.

3. The method of claim 1, wherein the step of returning (503), according to the determined resource return deadline and the current job execution progress of the second job management server (900), the resources to be returned to the resource scheduling server (800) before expiration of the resource return deadline comprises a step of:
determining the remaining time for completion of the current job according to the current job execution progress of the second job management server (900).

4. The method of claim 1, wherein the step of
returning (503), according to the determined resource return deadline and the current job execution progress of the second job management server (900), the resources to be returned to the resource scheduling server (800) before expiration of the resource return deadline comprises the steps of:
determining the remaining time for completion of the current job according to the current job execution progress of the second job management server (900); and
backing up the current job, recording a backup position, and returning the resources to be returned to the resource scheduling server (800) after the backup is completed in response to determining that the sum of the current time and the remaining time for completion of the current job is later than the resource return deadline.

5. The method of claim 4, further comprising the steps of:
receiving resources re-allocated by the resource scheduling server (800);
acquiring the backup of the current job; and
resuming the execution of the current job from the backup position.

6. A distributed system resource allocation method performed by a resource scheduling server (800), the method comprising the steps of:
determining a first job management server (700) for resource preemption and a second job management server (900) for resource return in response to determining that a resource preemption condition is met;
sending a resource preemption request to the second job management server (900) for resource return, the resource preemption request comprising job execution information corresponding to the first job management server for resource preemption, wherein the job execution information comprises information for determining a resource return deadline, the job execution information comprising an output deadline of a job and execution time of the job or comprising a resource obtaining deadline of the job, the resource return deadline being the latest time by which the second job management server (900) must return the resources; and
receiving a resource return request sent by the second job management server (900) for resource return, and allocating resources corresponding to the resource return request to the first job management server (700) for resource preemption.

7. The method of claim 6, wherein the step of
determining that the resource preemption condition is met comprises a step of:
determining that a priority of a received resource application request is high and a quantity of remaining available resources of the system is less than a quantity of resources requested by the resource application request.

8. The method of claim 6 or 7, wherein:
a or the received application request comprises the output deadline of the job; and
the execution time of the job is determined by:
acquiring historical data of the job, and determining the execution time of the job according to the historical data of the job; and
the resource obtaining deadline of the job is determined by:
determining the resource obtaining deadline of the job according to a difference between the output deadline of the job and the execution time of the job.

9. A distributed system resource allocation method performed by a first job management server (700), the method comprising the steps of:
sending a resource application request to a resource scheduling server (800), the resource application request comprising job execution information of the first job management server (700), wherein the job execution information comprises at least an output deadline of a job or a resource obtaining deadline of the job for determining a resource return deadline, the resource return deadline being the latest time by which a second job management server (900) must return resources; and
receiving a resource allocation request sent by the resource scheduling server (800), and acquiring resources corresponding to the resource allocation request.

10. A machine-readable medium storing a set of instructions which, when executed by one or more processors (1001) of a computer, cause the computer to perform all the steps of a resource allocation method of any of claims 1 to 9.

11. An apparatus for resource allocation, comprising
a memory (1002) storing a set of instructions; and
one or more processors (1001) configured to execute the set of instructions to cause the apparatus to perform the method of claims 1 to 5.

12. An apparatus for resource allocation, comprising:
a memory (1002) storing a set of instructions; and
one or more processors (1001) configured to execute the set of instructions to cause the apparatus to perform the method of any of claims 6 to 8.

13. An apparatus for resource allocation, comprising:
a memory (1002); and
one or more processors (1001) configured to execute the set of instructions to cause the apparatus to perform the method of claim 9.

14. A distributed resource allocation system, comprising:
a resource scheduling server (800) comprising the apparatus of claim 12;
a first job management server (700) comprising the apparatus of claim 13; and
a second job management server (900) comprising the apparatus of claim 11.

## Patentansprüche

1. Verteiltes Systemressourcenzuweisungsverfahren, das von einem zweiten Auftragsmanagement-Server (900) durchgeführt wird, das Verfahren umfassend die folgenden Schritte:
Empfangen (501) einer Ressourcen-Vorbelegungsanforderung, die von einem Ressourcen-Planungsserver (800) gesendet wird, wobei die Ressourcen-Vorbelegungsanforderung, Auftragsausführungsinformationen umfasst, die einem ersten Auftragsmanagement-Server (700) entsprechen;
Bestimmen (502), gemäß den Auftragsausführungsinformationen, die dem ersten Auftragsmanagement-Server (700) entsprechen und in der Ressourcen-Vorbelegungsanforderung enthalten sind, von Ressourcen, die von dem zweiten Auftragsmanagement-Server (900) zurückzugeben sind, und einer Ressourcen-Rückgabefrist, wobei die Auftragsausführungsinformationen eine Ausgabefrist eines Auftrags und eine Ausführungszeit des Auftrags umfassen oder eine Ressourcen-Erlangungsfrist des Auftrags umfassen, wobei die Ressourcen-Rückgabefrist die späteste Zeit ist, bis zu der der zweite Auftragsmanagement-Server (900) die Ressourcen zurückgeben muss; und
Zurückgeben (503), gemäß der Ressourcen-Rückgabefrist und einem aktuellen Auftragsausführungsfortschritt des zweiten Auftragsmanagement-Servers (900), der Ressourcen, die vor Ablauf der Ressourcen-Rückgabefrist an den Ressourcen-Planungsserver (800) zurückzugeben sind,
wobei die Ressourcen, die an den Ressourcen-Planungsserver (800) zurückzugeben sind, zurückgegeben werden, nachdem eine Ausführung des aktuellen Auftrags abgeschlossen ist, wenn eine Summe aus einer aktuellen Zeit und einer verbleibenden Zeit für einen Abschluss des aktuellen Auftrags nicht größer ist als die Ressourcen-Rückgabefrist.

2. Verfahren nach Anspruch 1,
wobei die Auftragsausführungsinformationen, die dem ersten Auftragsmanagement-Server (700) entsprechen, die Ausgabefrist des Auftrags und die Ausführungszeit des Auftrags umfassen, und
wobei der Schritt eines Bestimmens (502), gemäß den Auftragsausführungsinformationen, die dem ersten Auftragsmanagement-Server (700) entsprechen und in der Ressourcen-Vorbelegungsanforderung enthalten sind, der Ressourcen, die von dem zweiten Auftragsmanagement-Server (900) zurückzugeben sind, und der Ressourcen-Rückgabefrist die folgenden Schritte umfasst:
Bestimmen der Ressourcen-Erlangungsfrist des Auftrags gemäß einer Differenz zwischen der Ausgabefrist des Auftrags und der Ausführungszeit des Auftrags, und
Festlegen der Ressourcen-Rückgabefrist des zweiten Auftragsmanagement-Servers (900) als Ressourcen-Erlangungsfrist des Auftrags.

3. Verfahren nach Anspruch 1, wobei die Schritte eines Zurückgebens (503), gemäß der bestimmten Ressourcen-Rückgabefrist und dem aktuellen Auftragsausführungsfortschritt des zweiten Auftragsmanagement-Servers (900), der an den Ressourcen-Planungsserver (800) zurückzugebenden Ressourcen vor Ablauf der Ressourcen-Rückgabefrist die folgenden Schritte umfasst:
Bestimmen der verbleibenden Zeit für einen Abschluss des aktuellen Auftrags gemäß dem aktuellen Auftragsausführungsfortschritt des zweiten Auftragsmanagement-Servers (900).

4. Verfahren nach Anspruch 1, wobei die Schritte eines Zurückgebens (503), gemäß der bestimmten Ressourcen-Rückgabefrist und dem aktuellen Auftragsausführungsfortschritt des zweiten Auftragsmanagement-Servers (900), der an den Ressourcen-Planungsserver (800) zurückzugebenden Ressourcen vor Ablauf der Ressourcen-Rückgabefrist die folgenden Schritte umfasst:
Bestimmen der verbleibenden Zeit für einen Abschluss des aktuellen Auftrags gemäß dem aktuellen Auftragsausführungsfortschritt des zweiten Auftragsmanagement-Servers (900); und
Sichern des aktuellen Auftrags, Aufzeichnen einer Sicherungsposition und Zurückgeben der zurückzugebenden Ressourcen an den Ressourcen-Planungsserver (800), nachdem die Sicherung abgeschlossen ist, als Reaktion auf ein Bestimmen, dass die Summe aus der aktuellen Zeit und der verbleibenden Zeit für den Abschluss des aktuellen Auftrags nach der Ressourcen-Rückgabefrist ist.

5. Verfahren nach Anspruch 4, ferner umfassend die folgenden Schritte:
Empfangen von Ressourcen, die vom Ressourcen-Planungsserver (800) neu zugewiesen werden;
Erfassen der Sicherungskopie des aktuellen Auftrags; und
Wiederaufnehmen der Ausführung des aktuellen Auftrags ab der Sicherungsposition.

6. Verteiltes Systemressourcenzuweisungsverfahren, das von einem Ressourcen-Planungsserver (800) ausgeführt wird, das Verfahren umfassend die folgenden Schritte:
Bestimmen eines ersten Auftragsmanagement-Servers (700) zur Ressourcenvorbelegung und eines zweiten Auftragsmanagement-Servers (900) zur Ressourcenrückgabe als Reaktion auf ein Bestimmen, dass eine Ressourcenvorbelegungsbedingung erfüllt ist;
Senden einer Ressourcen-Vorbelegungsanforderung an den zweiten Auftragsmanagement-Server (900) zur Ressourcenrückgabe, die Ressourcen-Vorbelegungsanforderung umfassend Auftragsausführungsinformationen, die dem ersten Auftragsmanagement-Server zur Ressourcen-Vorbelegungsanforderung entsprechen, wobei die Auftragsausführungsinformationen Informationen zum Bestimmen einer Ressourcen-Rückgabefrist umfassen, die Auftragsausführungsinformationen umfassend eine Ausgabefrist eines Auftrags und eine Ausführungszeit des Auftrags oder umfassend eine Ressourcen-Erlangungsfrist des Auftrags, wobei die Ressourcen-Rückgabefrist der späteste Zeitpunkt ist, bis zu dem der zweite Auftragsmanagement-Server (900) die Ressourcen zurückgeben muss; und
Empfangen einer Ressourcen-Rückgabeanforderung, die von dem zweiten Auftragsmanagement-Server (900) zur Ressourcenrückgabe gesendet wird, und Zuweisen von Ressourcen, die der Ressourcen-Rückgabeanforderung entsprechen, an den ersten Auftragsmanagement-Server (700) zur Ressourcenvorvorbelegung.

7. Verfahren nach Anspruch 6, wobei der Schritt eines Bestimmens, dass die RessourcenVorbelegungsbedingung erfüllt ist, den Schritt eines Bestimmens umfasst, dass eine Priorität einer empfangenen Ressourcen-Anwendungsanforderung hoch ist und eine Menge an verbleibenden verfügbaren Ressourcen des Systems geringer ist als eine Menge an Ressourcen, die durch die Ressourcen-Anwendungsanforderung angefordert wird.

8. Verfahren nach Anspruch 6 oder 7, wobei:
eine oder die empfangene Anwendungsanforderung die Ausgabefrist des Auftrags umfasst; und
die Ausführungszeit des Auftrags durch Folgendes bestimmt wird:
Erfassen von historischen Daten des Auftrags und Bestimmen der Ausführungszeit des Auftrags gemäß den historischen Daten des Auftrags; und
wobei die Ressourcen-Erlangungsfrist des Auftrags durch Folgendes bestimmt wird:
Bestimmen der Ressourcen-Erlangungsfrist des Auftrags entsprechend einer Differenz zwischen der Ausgabefrist des Auftrags und der Ausführungszeit des Auftrags.

9. Verteiltes Systemressourcenzuweisungsverfahren, das von einem ersten Auftragsmanagement-Server (700) durchgeführt wird, das Verfahren umfassend die Schritte eines Sendens einer Ressourcen-Anwendungsanforderung an einen Ressourcen-Planungsserver (800), die Ressourcen-Anwendungsanforderung umfassend Auftragsausführungsinformationen des ersten Auftragsmanagement-Servers (700), wobei die Auftragsausführungsinformationen mindestens eine Ausgabefrist eines Auftrags oder eine Ressourcen-Erlangungsfrist des Auftrags umfassen, um eine Ressourcen-Rückgabefrist zu bestimmen, wobei die Ressourcen-Rückgabefrist der späteste Zeitpunkt ist, an dem ein zweiter Auftragsmanagement-Server (900) Ressourcen zurückgeben muss; und
Empfangen einer Ressourcen-Zuweisungsanforderung, die von dem Ressourcen-Planungsserver (800) gesendet wird, und Erfassen von Ressourcen, die der Ressourcen-Zuweisungsanforderung entsprechen.

10. Maschinenlesbares Medium, das einen Satz von Befehlen speichert, die, wenn sie von einem oder mehreren Prozessoren (1001) eines Computers ausgeführt werden, den Computer veranlassen, alle Schritte eines Ressourcen-Zuweisungsverfahrens nach einem der Ansprüche 1 bis 9 durchzuführen.

11. Vorrichtung zur Ressourcen-Zuweisung, umfassend einen Speicher (1002), der einen Satz von Anweisungen speichert; und
einen oder mehrere Prozessoren (1001), die konfiguriert sind, um den Satz von Befehlen auszuführen, um die Vorrichtung zu veranlassen, das Verfahren nach Anspruch 1 bis 5 durchzuführen.

12. Vorrichtung zur Ressourcenzuweisung, umfassend:
einen Speicher (1002), der einen Satz von Anweisungen speichert; und
einen oder mehrere Prozessoren (1001), die konfiguriert sind, um den Satz von Anweisungen auszuführen, um die Vorrichtung zu veranlassen, das Verfahren nach einem der Ansprüche 6 bis 8 durchzuführen.

13. Vorrichtung zur Ressourcenzuweisung, umfassend:
einen Speicher (1002); und
einen oder mehrere Prozessoren (1001), die konfiguriert sind, um den Satz von Befehlen auszuführen, um die Vorrichtung zu veranlassen, das Verfahren nach Anspruch 9 durchzuführen.

14. Verteiltes Ressourcen-Zuweisungssystem, umfassend:
einen Ressourcen-Planungsserver (800), umfassend die Vorrichtung nach Anspruch 12;
einen ersten Auftragsmanagement-Server (700), umfassend die Vorrichtung nach Anspruch 13; und
einen zweiten Auftragsmanagement-Server (900), umfassend die Vorrichtung nach Anspruch 11.

## Revendications

1. Procédé d'attribution de ressources système distribuées exécuté par un second serveur de gestion de tâches (900), le procédé comprenant les étapes de :
réception (501) d'une demande de préemption de ressources envoyée par un serveur de planification de ressources (800), la demande de préemption de ressources comprenant des informations d'exécution de tâches correspondant à un premier serveur de gestion de tâches (700) ;
détermination (502), en fonction des informations d'exécution de tâches correspondant au premier serveur de gestion de tâches (700) et comprises dans la demande de préemption de ressources, des ressources devant être renvoyées par le second serveur de gestion de tâches (900) et une échéance de renvoi de ressources, lesdites informations d'exécution de tâches comprenant une échéance de sortie d'une tâche et un temps d'exécution de la tâche ou comprenant une échéance d'obtention de ressources de la tâche, l'échéance de renvoi de ressources correspondant au dernier moment auquel le second serveur de gestion de tâches (900) doit renvoyer les ressources ; et
renvoi (503), en fonction de l'échéance de renvoi de ressources et de la progression de l'exécution de la tâche courante du second serveur de gestion de tâches (900), les ressources devant être renvoyées au serveur de planification de ressources (800) avant l'expiration de l'échéance de renvoi de ressources,
lesdites ressources devant être renvoyées au serveur de planification de ressources (800) étant renvoyées après l'achèvement de l'exécution de la tâche courante lorsque la somme de l'heure courante et du temps restant pour l'achèvement de la tâche courante n'est pas supérieure à l'échéance de renvoi des ressources.

2. Procédé selon la revendication 1,
lesdites informations d'exécution de tâche correspondant au premier serveur de gestion de tâches (700) comprenant l'échéance de sortie de la tâche et le temps d'exécution de la tâche, et
ladite étape de détermination (502), selon les informations d'exécution de tâches correspondant au premier serveur de gestion de tâches (700) et compris dans la demande de préemption de ressources, les ressources devant être renvoyées par le second serveur de gestion de tâches (900) et ladite échéance de renvoi de ressources comprenant les étapes de :
détermination de l'échéance d'obtention de ressources de la tâche en fonction de la différence entre l'échéance de sortie de la tâche et le temps d'exécution de la tâche, et
établissement de l'échéance de renvoi de ressources du second serveur de gestion de tâche (900) comme échéance d'obtention de ressources de la tâche.

3. Procédé selon la revendication 1, lesdites étapes de renvoi (503), selon l'échéance de renvoi de ressources déterminée et la progression de l'exécution de la tâche courante du second serveur de gestion de tâches (900), les ressources devant être renvoyées au serveur de planification de ressources (800) avant l'expiration de l'échéance de renvoi de ressources comprenant l'étape de :
détermination du temps restant pour l achèvement de la tâche courante en fonction de la progression de l'exécution de la tâche courante du second serveur de gestion de tâches (900).

4. Procédé selon la revendication 1, lesdites étapes de renvoi (503), selon l'échéance de renvoi de ressources déterminée et la progression de l'exécution de la tâche courante du second serveur de gestion de tâches (900), les ressources devant être renvoyées au serveur de planification de ressources (800) avant l'expiration de l'échéance de renvoi de ressources comprenant les étapes de :
détermination du temps restant pour l'achèvement de la tâche courante en fonction de la progression de l'exécution de la tâche courante du second serveur de gestion de tâches (900) ; et
sauvegarde de la tâche courante, enregistrement d'une position de sauvegarde et renvoi des ressources devant être renvoyées au serveur de planification de ressources (800) après l'achèvement de la sauvegarde en réponse à la détermination que la somme de l'heure courante et du temps restant pour l'achèvement de la tâche courante est postérieure à l'échéance de renvoi des ressources.

5. Procédé selon la revendication 4, comprenant en outre les étapes de :
réception des ressources réattribuées par le serveur de planification de ressources (800) ;
acquisition de la sauvegarde de la tâche courante ; et
reprise de l'exécution de la tâche en cours à partir de la position de sauvegarde.

6. Procédé d'attribution de ressources système distribuées exécuté par un serveur de planification de ressources (800), le procédé comprenant les étapes de :
détermination d'un premier serveur de gestion de tâches (700) pour la préemption de ressources et un second serveur de gestion de tâches (900) pour le renvoi de ressources en réponse à la détermination qu'une condition de préemption de ressources est satisfaite ;
envoi d'une demande de préemption de ressources au second serveur de gestion de tâches (900) pour le renvoi de ressources, la demande de préemption de ressources comprenant des informations d'exécution de tâches correspondant au premier serveur de gestion de tâches pour la préemption de ressources, lesdites informations d'exécution de tâches comprenant des informations destinées à déterminer une échéance de renvoi de ressources, les informations d'exécution de tâches comprenant une échéance de sortie d'une tâche et une échéance d'exécution de la tâche ou comprenant une échéance d'obtention de ressources de la tâche, l'échéance de renvoi de ressources étant le dernier moment auquel le second serveur de gestion de tâches (900) doit renvoyer les ressources ; et
réception d'une demande de renvoi de ressources envoyée par le second serveur de gestion de tâches (900) pour un renvoi de ressources, et attribution des ressources correspondant à la demande de renvoi de ressources au premier serveur de gestion de tâches (700) pour une préemption de ressources.

7. Procédé selon la revendication 6, ladite de détermination du fait que la condition de préemption de ressource est satisfaite comprenant l'étape de : détermination qu'une priorité d'une demande d'application de ressources reçue est élevée et que la quantité de ressources disponibles restantes du système est inférieure à la quantité de ressources demandées par la demande d'application de ressources.

8. Procédé selon la revendication 6 ou 7 :
une ou ladite demande d'application reçue comprenant l'échéance de sortie de la tâche ; et
ledit temps d'exécution de la tâche étant déterminé par :
l'acquisition des données historiques de la tâche, et la détermination du temps d'exécution de la tâche selon les données historiques de la tâche ; et
ladite échéance d'obtention des ressources de la tâche étant déterminée par :
la détermination de l'échéance d'obtention de ressources de la tâche en fonction de la différence entre l'échéance de sortie de la tâche et le temps d'exécution de la tâche.

9. Procédé d'attribution de ressources système distribuées exécuté par un premier serveur de gestion de tâches (700), le procédé comprenant les étapes de :
envoi d'une demande d'application de ressources à un serveur de planification de ressources (800), la demande d'application de ressources comprenant des informations d'exécution de tâches du premier serveur de gestion de tâches (700), lesdites informations d'exécution de tâches comprenant au moins une échéance de sortie d'une tâche ou une échéance d'obtention de ressources de la tâche pour déterminer une échéance de renvoi de ressources, l'échéance de renvoi de ressources étant le dernier moment auquel un second serveur de gestion de tâches (900) doit renvoyer des ressources ; et
réception d'une demande d'attribution de ressources envoyée par le serveur de planification de ressources (800), et d'acquisition de ressources correspondant à la demande d'attribution de ressources.

10. Support lisible par machine stockant un ensemble d'instructions qui, lorsqu'elles sont exécutées par un ou plusieurs processeurs (1001) d'un ordinateur, amènent l'ordinateur à exécuter toutes les étapes du procédé d'attribution de ressources selon l'une quelconque des revendications 1 à 9.

11. Appareil d'attribution de ressources, comprenant
une mémoire (1002) stockant un ensemble d'instructions ; et
un ou plusieurs processeurs (1001) configurés pour exécuter l'ensemble des instructions de manière amener l'appareil à effectuer le procédé selon l'une quelconque des revendications 1 à 5.

12. Appareil permettant l'attribution de ressources, comprenant :
une mémoire (1002) stockant un ensemble d'instructions ; et
un ou plusieurs processeurs (1001) configurés pour exécuter l'ensemble des instructions de manière à amener l'appareil à effectuer le procédé selon l'une quelconque des revendications 6 à 8.

13. Appareil permettant l'attribution de ressources, comprenant :
une mémoire (1002) ; et
un ou plusieurs processeurs (1001) configurés pour exécuter l'ensemble des instructions de manière à amener l'appareil à effectuer le procédé selon la revendication 9.

14. Système d'attribution de ressources distribuées, comprenant :
un serveur de planification de ressources (800) comprenant l'appareil selon la revendication 12 ;
un premier serveur de gestion de tâches (700) comprenant l'appareil selon la revendication 13 ; et
un second serveur de gestion de tâches (900) comprenant l'appareil selon la revendication 11.
